# EUROPEAN PATENT SPECIFICATION

(11) **EP 0 449 666 B1**
(45) Date of publication and mention of the grant of the patent: **15.11.1995**
(21) Application number: 91302849.4
(22) Date of filing: 02.04.1991
(51) Int. Cl.: B29C 45/16, B62D 25/18

(54) **Method for forming mud guard**
Verfahren zum Herstellen eines Kotflügels
Procédé pour fabriquer un garde-boue

(30) Priority: 30.03.1990 JP 85346/90; 30.03.1990 JP 85347/90
(43) Date of publication of application: 02.10.1991
(73) Proprietor: KINUGAWA RUBBER INDUSTRIAL CO., LTD., Chiba-shi Chiba-ken (JP)
(72) Inventor: Haraikawa, Toshikatsu, c/o KINUGAWA, Chiba-shi, Chiba-ken (JP); Midorikawa, Kazuhiko, c/o KINUGAWA, Chiba-shi, Chiba-ken (JP)
(74) Representative: Blanco White, Henry Nicholas

(56) References cited:
- EP-A- 0 031 620
- FR-A- 1 019 163
- GB-A- 1 181 666
- US-A- 4 269 802
- PATENT ABSTRACTS OF JAPAN vol 10, no.349 (M-538)(2405) 26 November 1986 & JP-A-61 147 097 (NIPPON RADIATOR CO.LTD.)
- PATENT ABSTRACTS OF JAPAN vol.13, no. 560 (M-906)(3908) 13 December 1989 & JP-A- 1233 178 (TOYODA GOSEI CO.LTD)

## Description

The present invention relates generally to a method for forming a mud guard for automotive vehicles. Specifically, the present invention relates to a method for forming a mud guard attached to a portion rear of the wheels of an automotive vehicle.

In automotive vehicles, outer surface of fenders are subjected to adherence of mud or pebbles or splashes caused by wheel rotation while traveling. In order to prevent mud odhesion and prevent flawing by pebble impact, mud guards have been generally attached to rear margins of fenders. Conventionally, a mud guard is composed of an upper portion including a mounting member, substantially extending on a plane and having at least one hole for mounting to the fender panel surface and, a fender guard member extending from the outer periphery of the mounting member for enveloping a lower portion of the fender panel, a flange thereof being contacted to the fender panel, and a lower portion including a skirt member for interfering with adhesion of mud or pebbles to the fender panel and having raised rigidity for standing against impact when subjected to splashes so as not to deform or damage the surface of the skirt member. Generally, the mounting member, the fender guard member and the skirt member are formed by molding techniques such as injection molding using resin material so as to achieve a desired configuration. Additionally, mud guards of which the mounting member and the fender guard member are reinforced by metal reinforcement embedded thereinto have been widely utilized. However, the metal reinforcement is susceptible to a rust, and a total weight of the mud guard is increased by inclusion of the embedded metal.

Japanese patent application first publication 1-233178, on which the preamble of claim 8 is based, discloses a mud guard having light weight without concern about rust, of which an upper portion to be reinforced is formed of hard resin, and another portion is formed of flexible resin. The mud guard is molded by the injection molding. A die for the molding is composed of an upper mold having a substantially thick cavity for an upper portion of the mud guard, and a lower mold having thinner portion for a skirt member of the mud guard. Flexible resin is injected to both molds via an injection nozzle. Hard resin is injected after or during injection of the flexible resin. Thus, a mud guard having an upper portion formed of hard resin and a skirt member formed of flexible resin is molded.

However, flow characteristics of both resins vary under different injection conditions because of characteristic differences such as viscosity and hardenability. Therefore, a desired resin may not reach the desired portion of the cavity to be molded. Then product quality of the molded mud guard becomes unhomogeneous.

On the other hand, a mud guard has been required not only for interfering with mud or pebbles impact on the fender panel but also as a valuable addition as a cosmetic member of the vehicle. For the latter purpose, it is important to that the outer appearance be kept attractive. Consequently a mud guard is frequently painted a color balanced with that of the vehicle body especially with that of the fender so as to look integral with the fender. Commonly, for this usage, there is no need to paint the mud guard entirely, generally only an outer surface of the fender guard member is painted. A molded article is generally painted by the steps of, degreasing the article surface, masking a surface not to be painted with masking tape, applying primer treatment to the surface to be painted, applying a paint of desired color to the surface to be painted, drying the painted surface, and removing the masking tape from the unpainted surface.

As will be appreciated, these steps are very labour intensive, especially, the masking step has to be manually, individually carried out in respect of each article. Therefore, productive efficiency of painted mudguards is very poor.

It is therefore a principal object of the present invention to provide a method for forming a rustproof mud guard.

It is another object of the present invention to provide a method for forming a mud guard having light weight.

It is a further object of the present invention to provide a method for forming a mud guard of which all members are formed homogeneously by resins having difference characteristics.

It is a furthermore object of the present invention to provide a method for forming a mud guard on which a surface is partially painted.

The invention provides a method for forming a mud guard including a first portion and a second portion comprising the steps of: injecting a first material into a mold having a first arrangement to configure a first cavity therein so as to mold said first portion of said mud guard, partially replacing said mold with a mold member having a second arrangement, after solidification of said first material, said mold member configuring a second cavity by said second arrangement to form a desired configuration of said mud guard, injecting a second material into said mold member having said second arrangement so as to mold said second portion of said mud guard, said first and said second portions of said mud guard being formed individually with substantially homogeneous distribution of the respective materials therein.

The invention also provides a mold for forming a mud guard comprising: a plurality of mold members arranged in a first arrangement configuring a first cavity; characterised by said mold members including at least one replaceable member, and at least one replacement member to replace said replaceable member to form a second arrange-ment with remaining mold members for configuring a second cavity, said first cavity associating with said second cavity for configuring a desired configuration of said mud guard.

The first material for the first portion of the mud guard may be selected from the group including, graphite fibre polypropylene, graphite fibre polyamide, and carbon fibre polyamide. The second material for the second portion of the mud guard may be a flexible resin having thermoplasticity selected from the group of olefin, styrene, and urethane.

The present invention will be understood more fully from the detailed description given herebelow and from the accompanying drawings of the preferred embodiments of the invention. However, the drawings are not intended to imply limitation of the invention to a specific embodiment, but are for explanation and understanding only.

In the drawings:
**Fig. 1** is a perspective view of a mud guard;
**Fig. 2** is a longitudinal sectional view of a first mold arrangement showing a first step of a method for forming a mud guard according to the present invention;
**Fig. 3** is a longitudinal sectional view of a second mold arrangement showing a second step of a method for forming the mud guard according to the present invention;
**Fig. 4** is a longitudinal sectional view of the second mold arrangement showing a third step of a method for forming the mud guard according to the present invention;
**Fig. 5** is a sectional view of the mud guard taken along line I-I of **Fig. 1**;
**Fig. 6** is a longitudinal sectional view of a mold arrangement according to a second embodiment of the present invention;
**Fig. 7** is a longitudinal sectional view of a first mold arrangement showing a first step of a method for forming a mud guard according to a third embodiment of the present invention;
**Fig. 8** is a longitudinal sectional view of a second mold arrangement showing a second step of a method for forming the mud guard according to the third embodiment of the present invention; and
**Fig. 9** is a longitudinal sectional view of the second mold arrangement showing a third step of a method for forming the mud guard according to the third embodiment of the present invention.

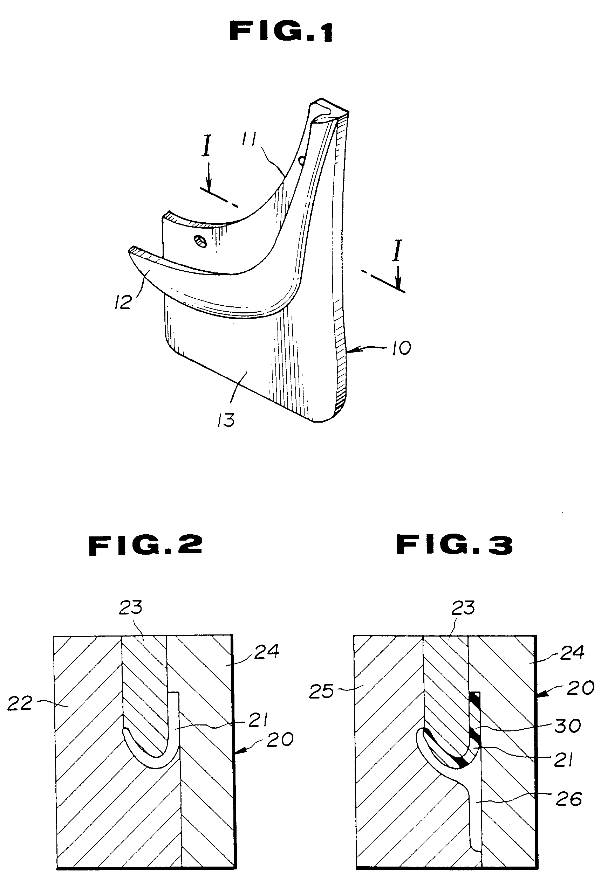

Referring now to the drawings, particularly to **Fig. 1**, a mud guard **10** is composed of a mounting member **11** of substantially extending plane having at least one hole for mounting to an automotive fender panel surface and a fender guard member **12** extending from the outer periphery of the mounting member **11** for enveloping a lower portion of the fender panel, a flange thereof being contacted against the lower portion of the fender panel, and a skirt member **13** for interfering with adhesion of splashing of mud or pebbles onto the fender panel.

**Figs. 2** to **4** show injection molding steps of the mud guard **10**. Referring now to **Fig. 2** showing a longitudinal sectional view of a mold **20** having a first cavity **21** therein, the mold **20** is separably formed into a first mold member **22**, a second mold member **23**, and a third mold member **24**. The first mold member **22** configures an essentially lower portion of the cavity **21** which corresponds to the mounting member and the upper portion of the fender guard member and concurrently configures a side portion of the cavity extending from the end corresponding to the fender guard member. The third mold member **24** configures another side portion of the cavity **21** corresponding to the mounting surface of the mounting member. The second mold member **23** configures an upper portion of the cavity **21** sandwiched between the first and the third mold members being contacted therewith. The cavity **21** is communicated with an injection cylinder via a runner nozzle (both not shown in **Fig. 2**). In order to raise mechanical strength for enhancing mountability. Hard resin having thermoplasticity, such as graphite fibre polypropylene (GFPP), graphite fibre polyamide (GFPA), or carbon fibre polyamide (CFPA) is injected into the cavity **21** from the injection cylinder via the runner nozzle.

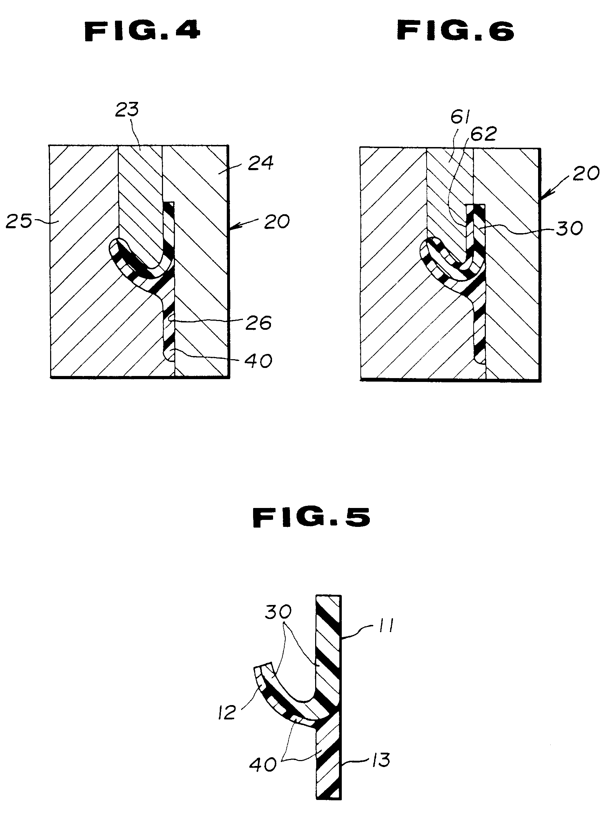

Reffering now to **Fig. 3** showing a seconf step of forming the mud guard, after the injection of the hard resin is finished and the resin is solidified, the first mold member **22** is replaced by a fourth mold member **25**. The fouth mold member **25** configures a second cavity **26**, which corresponds to a lower portion of the mud guard including the skirt member, with the second and the third mold members. Thus an outer circumference of the mud guard is shaped by the first and the second cavites **21** and **26**. An upper portion **30** molded of hard resin is held by the second and the third mold members **23**, **24** while replacing of the first and the fourth mold members **22** and **25**. After clamping the mold, flexible resin having thermoplasticity such as selected from the type consisting of olefin, styrene, or urethane is injected into the second cavity **26**, for providing flexibility against impact. Thus a lower molded portion **40** is molded of flexible resin as shown in **Fig. 4** showing a third step of forming the mud guard.

Thus, as shown in **Fig. 5**, the obtained mud guard is composed of the upper portion **30** including the mounting member **11** and the inner circumference of the fender guard member **12** formed of hard resin, and the lower portion **40** including the skirt member **13** formed of flexible resin.

**Fig. 6** shows a second embodiment of the present invention. As shown in this figure, it is possible to replace the second mold member with a fifth mold member **61** after the injection of the hard resin is finished. When the second mold member is replaced, a flexible portion **62** may also be formed on the upper circumference of the upper portion **30** molded of hard resin.

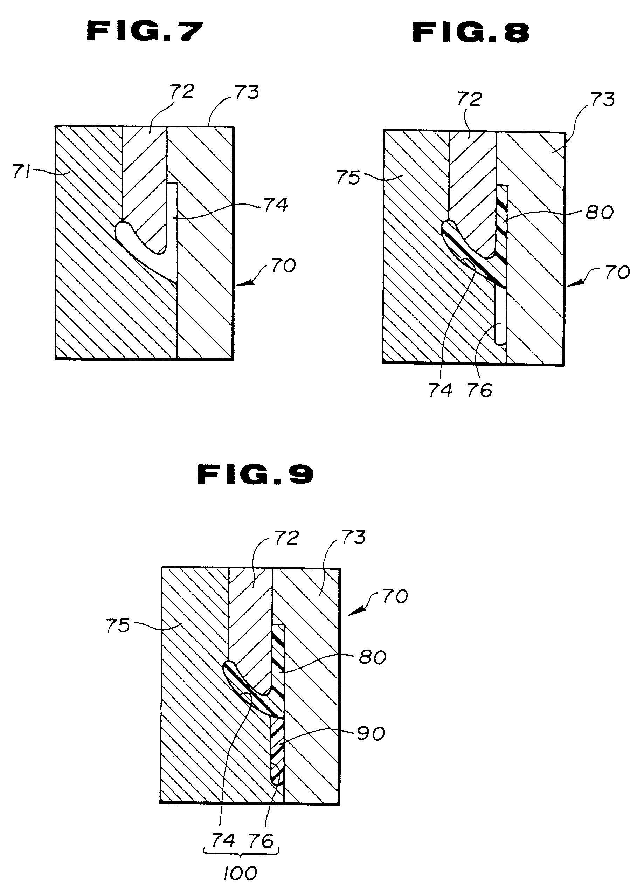

**Fig. 7** shows a longitudinal sectional view of a first mold arrangement for a first step of molding according to the third embodiment of the present invention. A mold **70** is formed being separable into a first mold member **71**, a second mold member **72**, and a third mold member **73**, these mold members configuring a first cavity **74** therein. The first mold member **71** configures an essentially lower portion of the cavity **74** which corresponds to the mounting member and the fender guard member and concurrently configures a side portion of the cavity extending from the end corresponding to the fender guard member. The third mold member **73** configures another side portion of the cavity **74** corresponding to the mounting surface of the mounting member. The second mold member **72** configures an upper portion of the cavity **72** sandwiched between the first and the third mold members contacted therewith. The cavity **74** is communicated with an injection cylinder via a runner nozzle (both not shown in **Fig. 7**).

A first thermoplastic resin such as GFPP, GFPA, or CFPA is injected into the cavity **74** after being colored beforehand with a color balanced with that of the automotive fender.

Referring now to **Fig. 8** showing a second step of forming the mud guard according to the third embodiment of the invention, after the injected first resin is solidified, the first mold member **71** is replaced by a fourth mold member **75**. The fourth mold member **75** configures a second cavity **76**, which corresponds to a lower portion of the mud guard including the skirt member, with the second and the third mold members. Thus an outer circumference of the mud guard is shaped by the first and the second cavities **74** and **76**. An upper molded portion **80** by the first resin is held by the second and the third mold members **72**, **73** while replacing of the first and the fourth mold members **71** and **75**. After clamping the mold, a second resin having thermoplasticity selected from the same or a different type of the first resin pre-colored into a different color therefrom is injected into the second cavity **76**. Thus a lower molded portion **90** is molded by the solidification of the second resin as shown in **Fig. 9** showing a third step of forming the mud guard.

Thus, configuration of the obtained article **100** is composed of upper portion **80** including the mounting member and the fender guard member being formed of the pre-colored first resin having a color balanced with that of the automotive fender, and lower portion **90** including the skirt member being formed of the second resin having different color from that of the upper portion **80**.

Painting is applied to the surface of the obtained article using a coating such as a urethane or acrylic type. At first, the surface of the article is degreased and conventional primer treatment is applied to the surface thereof. The coating is sprayed on the treated surface thereafter then the painted article is dried. The spraying step may be performed by brushing or electrodepositing the surface. Thus, a mud guard can be obtained of which a mounting member and a fender guard member are colored same color, and a skirt member is colored different color from that of the mounting and fender guard members.

It is also possible to color the mud guard, so the mounting and the skirt members are same color and only the fender guard member is a different color.

According to the present invention, a mud guard composed of an upper portion reinforced by a reinforcement material and a lower portion of a flexible material having homogeneous distribution respectively can be formed because the mold is partially replaced after one part of the mud guard is molded by injection for the following injection of another material to remaining mold parts of the mud guard. Therefore, although injection conditions are varied by using different kinds of material, each injection can be accomplished individually, so each material can be distributed homogeneously in each cavity. Accordingly, the production quality can be greatly raised.

On the other hand, when a mud guard is partially painted, the material can be colored before injecting, so painting process can be simplified because there is no need to mask manually portions not to be painted. Thus, the painting process can be automated, so productivity in forming the mud guard can be highly increased.

## Claims

1. A method for forming a mud guard (10) including a first portion (11) and a second portion (13) comprising the steps of: injecting a first material (30, 80) into a mold (20, 70) having a first arrangement to configure a first cavity (21) therein so as to mold said first portion (11, 30, 80) of said mud guard (10), partially replacing said mold (22) with a mold member (25, 61, 75) having a second arrangement, after solidification of said first material (30, 80), said mold member configuring a second cavity (26, 76) by said second arrangement to form a desired configuration of said mud guard (10), injecting a second material (40, 90) into said mold member (20) having said second arrangement so as to mold said second portion (13, 40, 90) of said mud guard, said first (30, 80) and said second (40, 90) portions of said mud guard being formed individually with substantially homogeneous distribution of the respective materials therein.

2. A method for forming a mud guard according to claim 1, which comprises using a hard resin as said first material and a flexible resin as said second material.

3. A method for forming a mud guard according to claim 1 or claim 2, wherein said first material is thermoplastic resin selected from the group of graphite fibre polypropylene, graphite fibre polyamide, and carbon fibre polyamide.

4. A method for forming a mud guard according to any one of claims 1 to 3, wherein said second material is theremoplastic resin selected from the group of olefin, styrene, and urethane.

5. A method for forming a mud guard according to any one of claims 1 to 4, wherein said first material and said second material are pre-colored before said step of injection, colors of said first and second materials being repectively different.

6. A method for forming a mud guard according to claim 5, comprising the step of: applying a bright finish on the surface of at least one of said colored materials with a clear coating.

7. A method for forming a mud guard according to claim 6, wherein the said bright finish is applied on the surface of said second material.

8. A mold (20, 70) for forming a mud guard (10) comprising: a plurality of mold members (22, 23, 24, 71, 72, 73) arranged in a first arrangement configuring a first cavity (21, 74); characterised by said mold members including at least one replaceable member (22, 71), and at least one replacement member (25, 61, 75) to replace said replaceable member (22, 23, 71) to form a second arrangement with remaining mold members for configuring a second cavity (26, 76), said first cavity (21, 74) associating with said second cavity (26, 76) for configuring a desired configuration of said mud guard (10).

## Patentansprüche

1. Verfahren zum Herstellen eines Schmutzfängers (10), der einen ersten Abschnitt (11) und einen zweiten Abschnitt (113) aufweist, das die folgenden Schritte umfaßt: Einspritzen eines ersten Materials (30,80) in eine Form (20,70) mit einem ersten Aufbau, die einen ersten Hohlraum (21) darin bildet, um so den ersten Abschnitt (11,30,80) des Schmutzfängers (10) zu formen, teilweises Austauschen der Form (22) gegen ein Formelement (25,61,75) mit einem zweiten Aufbau nach der Verfestigung des ersten Materials (30,80), wobei das Formelement durch den zweiten Aufbau einen zweiten Hohlraum (26,76) bildet, um eine gewünschte Form des Schmutzfängers (10) zu schaffen, Einspritzen eines zweiten Materials (40,90) in das Formelement (20) mit dem zweiten Aufbau, um so den zweiten Abschnitt (13,40,90) des Schmutzfängers zu formen, wobei der erste (30,80) und der zweite (40,90) Abschnitt des Schmutzfängers individuell bei im wesentlichen homogener Verteilung der entsprechenden Materialien darin hergestellt werden.

2. Verfahren zum Herstellen eines Schmutzfängers nach Anspruch 1, das den Einsatz eines harten Kunstharzes als das erste Material und eines flexiblen Kunstharzes als das zweite Material umfaßt.

3. Verfahren zum Herstellen eines Schmutzfängers nach Anspruch 1 oder Anspruch 2, wobei das erste Material ein Thermoplastharz ist, das aus der aus Graphitfaser-Polypropylen, Graphitfaser-Polyamid und Kohlefaser-Polyamid bestehenden Gruppe ausgewählt wird.

4. Verfahren zum Herstellen eines Schmutzfängers nach einem der Ansprüche 1 bis 3, wobei das zweite Material ein Thermoplastharz ist, das aus der aus Olefin, Styren und Urethan bestehenden Gruppe ausgewählt wird.

5. Verfahren zum Herstellen eines Schmutzfängers nach einem der Ansprüche 1 bis 4, wobei das erste Material und das zweite Material vor dem Schritt des Einspritzens vorgefärbt werden, wobei die Farben des ersten und des zweiten Materials jeweils unterschiedlich sind.

6. Verfahren zum Herstellen eines Schmutzfängers nach Anspruch 5, das den folgenden Schritt umfaßt: Auftragen einer hellen Oberflächenbeschichtung auf die Oberfläche wenigstens eines der gefärbten Materialien mit einer hellen Beschichtung.

7. Verfahren zum Herstellen eines Schmutzfängers nach Anspruch 6, wobei die helle Oberflächenbeschichtung auf die Oberfläche des zweiten Materials aufgetragen wird.

8. Form (20,70) zum Herstellen eines Schmutzfängers (10), die umfaßt: eine Vielzahl von Formelementen (22,23,24,71,72,73), die in einer ersten Anordnung angeordnet sind, die einen ersten Hohlraum (21,74) bildet; **dadurch gekennzeichnet**, daß die Formelemente wenigstens ein austauschbares Element (22,71) enthalten, und wenigstens ein Austauschelement (25,61,75) zum Austausch gegen das austauschbare Element (22,23,71), um eine zweite Anordnung mit den verbleibenden Formelementen herzustellen und einen zweiten Hohlraum (26,76) zu bilden, wobei der erste Hohlraum (21,74) mit dem zweiten Hohlraum (26,76) verbunden ist und einen gewünschten Aufbau des Schmutzfängers (10) bildet.

## Revendications

1. Procédé pour fabriquer un garde-boue (10) incluant une première partie (11) et une deuxième partie (13), comprenant les étapes consistant à : injecter un premier matériau (30, 80) dans un moule (20, 70) ayant un premier agencement pour configurer une première cavité (21) dans celui-ci de façon à mouler ladite première partie (11, 30, 80) dudit garde-boue (10), à remplacer partiellement ledit moule (22) par un élément de moule (25, 61, 75) ayant un deuxième agencement, après la solidification dudit premier matériau (30, 80) ledit élément de moule configurant une deuxième cavité (26, 76) au moyen dudit deuxième agencement, pour former une configuration à obtenir dudit garde-boue (10), à injecter un deuxième matériau (40, 90) dans ledit élément de moule (20) ayant ledit deuxième agencement, de façon à mouler ladite deuxième partie (13, 40, 90) dudit garde-boue, lesdites première (30, 80) et deuxième (40, 90) parties dudit garde-boue étant fabriquées individuellement, avec une distribution sensiblement homogène des matériaux respectifs dans celles-ci.

2. Procédé pour fabriquer un garde-boue selon la revendication 1, qui comprend l'utilisation d'une résine dure en tant que ledit premier matériau et d'une résine flexible en tant que ledit deuxième matériau.

3. Procédé pour fabriquer un garde-boue selon la revendication 1 ou la revendication 2, dans lequel ledit premier matériau est une résine thermoplastique choisie dans le groupe comprenant du polypropylène à fibres de graphite, le polyamide à fibres de graphite et le polyamide à fibres de carbone.

4. Procédé pour fabriquer un garde-boue selon l'une des revendications 1 à 3, dans lequel ledit deuxième matériau est une résine thermoplastique choisie dans le groupe comprenant l'oléfine, le styrène et l'uréthane.

5. Procédé pour fabriquer un garde-boue selon l'une des revendications 1 à 4, dans lequel ledit premier matériau et ledit deuxième matériau sont pré-colorés avant ladite étape d'injection, les couleurs desdits premier et deuxième matériaux étant respectivement différentes.

6. Procédé pour fabriquer un garde-boue selon la revendication 5, comprenant l'étape consistant à : appliquer une finition brillante sur la surface d'au moins l'un desdits matériaux colorés avec un revêtement clair.

7. Procédé pour fabriquer un garde-boue selon la revendication 6, dans lequel ladite finition brillante est appliquée sur la surface dudit deuxième matériau.

8. Moule (20, 70) pour fabriquer un garde-boue (10) comprenant : plusieurs éléments de moule (22, 23, 24, 71, 72, 73) disposés suivant un premier agencement configurant une première cavité (21, 74) ; caractérisé en ce que lesdits éléments de moule comprennent au moins un élément remplaçable (22, 71) et au moins un élément de remplacement (25, 61, 75) pour remplacer ledit élément remplaçable (22, 23, 71) pour former un deuxième agencement avec les éléments de moule restants pour configurer une deuxième cavité (26, 76), ladite première cavité (21, 74) étant associée avec ladite deuxième cavité (26,76) pour constituer une configuration à obtenir dudit garde-boue (10).
